# EUROPÄISCHE PATENTSCHRIFT

(11) **EP 0 683 188 B1**
(45) Veröffentlichungstag und Bekanntmachung des Hinweises auf die Patenterteilung: **10.03.1999**
(21) Anmeldenummer: 95106799.0
(22) Anmeldetag: 05.05.1995
(51) Int. Cl.: C08G 18/12, C08G 18/28, C08G 18/32, C09D 175/00

(54) **Hitzehärtbare Beschichtungsmittel und ihre Verwendung**
Thermosetting coating compositions and their use
Compositions de revêtement thermodurcissables et leur utilisation

(30) Priorität: 18.05.1994 DE 4417355
(43) Veröffentlichungstag der Anmeldung: 22.11.1995
(73) Patentinhaber: BAYER AG, 51368 Leverkusen (DE)
(72) Erfinder: König, Eberhard, Dr., D-51375 Leverkusen (DE); Engbert, Theodor, Dr., D-50968 Köln (DE); Pedain, Josef, Dr., D-51061 Köln (DE)

(56) Entgegenhaltungen:
- EP-A- 0 059 962

## Beschreibung

Die Erfindung betrifft ein neues hitzehärtbares Beschichtungsmittel auf Basis von Butanonoxim-blockierten Isocyanat-Vorpolymeren und cycloaliphatischen Polyaminen und seine Verwendung zur Herstellung von dekorativen, steinschlagfesten Überzügen auf metallischen Substraten, beispielsweise im Schwellerbereich eines Automobiles.

Steinschlagfeste Grundierungen, hergestellt aus blockierten NCO-Vorpolymeren einerseits und Diaminen andererseits, gehören als hitzehärtbare 1K-Systeme zum Stand der Technik. Derartige, beispielsweise in der DE-PS 2 131 299 beschriebenen Beschichtunsmittel enthalten aromatische Diisocyanate und Polyetherpolyole. Es liegt angesichts dieser Aufbaukomponenten auf der Hand, daß diese Beschichtungsmittel nur unter einer Decklackschicht praktisch verwendbar sind. Am Licht würde Vergilbung und Kreidung der Beschichtung eintreten. Dies gilt auch für die Beschichtungsmassen gemäß EP-A-0 536 614, die deshalb nur als Zwischenlackschicht oder im Unterbodenschutz eingesetzt werden. Beiden Systemen gemeinsam ist die Verwendung von ε-Caprolactam als Blockierungsmittel, was Einbrenntemperaturen von ca. 160°C voraussetzt. Von der Praxis werden jedoch zunehmend Beschichtungsmittel auf Basis von blockierten Polyisocyanaten gewünscht, die bereits bei ca. 140°C ausgehärtet werden können.

Aus der EP-A-0 059 962 sind jedoch bereits Beschichtungsmassen bekannt geworden, die auf Ketoxim-blockierten NCO-Prepolymeren aliphatischer Diisocyanate basieren. In den Ausführungsbeispielen werden ausschließlich NCO-Prepolymere auf Basis von Polyetherpolyolen beschrieben. Dies und auch die Verwendung der Systeme zur Herstellung steinschlagfester Zwischenschichten läßt den Schluß zu, daß die Beschichtungsmassen nicht für einen dekorativen, lichtbeständigen Einsatz als Decklack vorgesehen sind.

In der allgemeinen Beschreibung werden als Polyhydroxylverbindungen zur Herstellung der NCO-Prepolymeren beiläufig zwar auch Polyesterpolyole genannt, jedoch, wie den Ausführungsbeispielen zu entnehmen, nicht ernsthaft in Betracht gezogen.

Die der Erfindung zugrundeliegende Aufgabe bestand darin, hitzehärtbare Beschichtungsmassen auf Basis von blockierten NCO-Prepolymeren und cycloaliphatischen Diaminen zur Verfügung zu stellen, die folgende Eigenschaften in sich vereinen:
- Lichtbeständigkeit für den Einsatz zur Herstellung von lichtbeständigen Decklacken;
- Einbrenntemperaturen von ca. 140°C;
- Lagerstabilität bei 25°C während eines Zeitraums von mindestens 6 Monaten, unter "Lagerstabilität" ist hierunter die einwandfreie Verwendbarkeit nach einer entsprechenden Lagerung, d.h. eine allenfalls vernachlässigbare Viskositätserhöhung zu verstehen;
- Eignung zur Herstellung dekorativer Außenbeschichtungen und
- zäh-harte Konsistenz und dadurch gewährleistete Eignung als Steinschlagschutz.

Mit den nachstehend näher beschriebenen erfindungsgemäßen Bindemitteln, die auf NCO-Prepolymeren auf Basis ausgewählter Ausgangsmaterialien basieren, konnten die genannten Voraussetzungen in optimaler Weise erfüllt werden.

Gegenstand der Erfindung sind hitzehärtbare Beschichtungsmittel, bestehend im wesentlichen aus einer Bindemittelkombination aus
A) mit Butanonoxim blockierte Isocyanatgruppen aufweisenden Vorpolymerisaten eines durchschnittlichen, aus NCO-Gehalt und -Funktionalität berechenbaren Molekulargewichts von 1 000 bis 10 000 auf Basis von
   A1) (cyclo)aliphatischen Polyisocyanaten und
   A2) Hydroxylgruppen aufweisenden organischen Verbindungen und
B) einer Härter-Komponente, bestehend aus mindestens einem cycloaliphatischem Polyamin mit mindestens zwei primären Aminogruppen
in einem Äquivalentverhältnis von blockierten Isocyanatgruppen zu Aminogruppen von 1:0,8 bis 1:1,2, sowie gegebenenfalls
C) aus der Beschichtungstechnologie bekannten Hilfs- und Zusatzstoffen,
dadurch gekennzeichnet, daß die Komponente A2)
zu 50 bis 90, vorzugsweise 60 bis 80 Hydroxyläquivalentprozent aus Hydroxylgruppen aufweisenden Polyestern A2.1),
zu 10 bis 50, vorzugsweise 20 bis 40 Hydroxyläquivalentprozent aus Polyhydroxylverbindungen A2.2), ausgewählt aus der Gruppe bestehend aus Hydroxylgruppen aufweisenden Polyacrylatharzen A2.2.1), Alkoxylierungsprodukten A2.2.2) von Bisphenol A, die im Mittel 2 bis 4 Alkylenoxideinheiten pro Molekül enthalten und Gemischen von Verbindungen A2.2.1) und A2.2.2),
sowie zu
0 bis 30 Hydroxyläquivalentprozent an sonstigen organischen Polyhydroxylverbindungen A2.3)
besteht.

Gegenstand der Erfindung ist auch die Verwendung dieser Beschichtungsmittel zur Herstellung von dekorativen, steinschlagfesten und dickschichtigen Decklacken auf metallischen Substraten nach den üblichen Methoden der Beschichtungstechnologie.

Als Polyisocyanate A1) kommen insbesondere (cyclo)aliphatische Diisocyanate des Molekulargewichtsbereichs 168 bis 300 wie beispielsweise 1,6-Diisocyanatohexan, 1-Isocyanato-3,5,5-trimethyl-5-isocyanatomethyl-cyclohexan (Isophorondiisocyanat, abgekürzt IPDI) und 4,4' 4,4'-Diisocyanatodicyclohexylmethan aber auch 1,4-Diisocyanatobutan, 2,4- und/oder 2,6-Diisocyanato-1-methyl-cyclohexan ("hydriertes TDI") oder 1,3-Bis(1-isocyanato-1-methylethyl)-benzol (Tetramethyl-xylylen-diisocyanat, abgekürzt TMXDI) in Betracht.

Die Polyhydroxylkomponente A2) besteht aus Gemischen der bereits vorstehend genannten Einzelkomponenten A2.1), A2.2) und gegebenenfalls A2.3) in den bereits obengenannten Mengenverhältnissen, wobei sich die in diesem Zusammenhang genannten Prozentsätze zu 100 ergänzen. Vorzugsweise wird auf die Mitverwendung der Komponente A2.3) verzichtet.

Die Komponente A2.1) weist eine Hydroxylzahl von 280 bis 28 bei einem mittleren Molekulargewicht Mn von 400 bis 4 000, vorzugsweise 500 bis 2 000, auf und besteht vorzugsweise aus Ethergruppen-freien, Estergruppen aufweisenden Polyhydroxylverbindungen.

Geeignete Estergruppen aufweisende Polyhydroxylverbindungen sind beispielsweise die an sich bekannten Kondensationsprodukte von mehrbasischen Säuren oder Anhydriden mehrbasischer Säuren mit überschüssigen Mengen an mehrwertigen Alkoholen. Geeignete mehrbasische Säuren oder Säureanhydride sind beispielsweise Adipinsäure, Maleinsäure, Maleinsäureanhydrid, Phthalsäure, Phthalsäureanhydrid, Tetrahydrophthalsäure, Tetrahydrophthalsäureanhydrid, Hexahydrophthalsäure, Hexahydrophthalsäureanhydrid oder Gemische derartiger mehrbasischer Säuren bzw. Säureanhydride. Geeignete mehrwertige Alkohole sind beispielsweise solche des Molekulargewichtsbereichs 62 bis 200, wie Ethylenglykol, Propylenglykol, die isomeren Butandiole, Pentandiole, Hexandiole, Octandiole, Glycerin, Trimethylolpropan oder beliebige Gemische derartiger mehrwertiger Alkohole. Besonders bevorzugt sind Polyesterpolyole aus Adipinsäure und Neopentylglykol und/oder 1,6-Dihydroxyhexan des Molekulargewichtsbereichs 500 bis 2 000.

Geeignete Estergruppen aufweisende Polyhydroxylverbindungen sind auch Polylactondiole, beispielsweise Umsetzungsprodukte von Hexandiol-1,6 mit ε - Caprolacton des Molekulargewichtsbereichs 500 bis 1 500 oder Polycarbonatdiole, insbesondere Hexandiol-1,6-polycarbonatdiole des Molekulargewichtsbereichs 500 bis 2 000, wie sie durch Kondensation des Diols mit Diphenylcarbonat oder Dimethylcarbonat in an sich bekannter Weise zugänglich sind.

Die Komponente A2.1) kann auch in Mengen von bis zu 50 Gew.-%, bezogen auf das Gesamtgewicht der Komponente A2.1), aus schwerverseifbaren Oligoestern langkettiger, hydroxylgruppenhaltiger Carbonsäuren wie beispielsweise Rizinusöl bestehen.

Die Komponente A2.2) besteht vorzugsweise entweder aus Hydroxylgruppen aufweisenden Polyacrylatharzen A2.2.1) oder aus alkoxyliertem Bisphenol A A2.2.2). Die Komponente A2.2) dient zur Regulierung der Lackhärte.

Bei den Polyacrylatharzen A2.2.1) handelt es sich um in Lacklösungsmitteln lösliche Copolymerisate von Hydroxylgruppen aufweisenden Monomeren mit anderen olefinisch ungesättigten Monomeren wie z. B. Butylacrylat, Methylmethacrylat, Styrol, Acrylsäure, Acrylnitril und/oder Methacrylnitril. Geeignete Hydroxylgruppen aufweisende Monomere sind insbesondere 2-Hydroxyethyl-(meth)acrylat und das durch Anlagerung von Propylenoxid an Acrylsäure bzw. Methacrylsäure erhältliche Hydroxypropyl-(meth)acrylat-Isomerengemisch. Der Hydroxylgruppengehalt der in Betracht kommenden Polyacrylatpolyole liegt im allgemeinen zwischen 1 und 10 Gew.-%.

Besonders bevorzugt sind Polyacrylatpolyole, basierend auf Hydroxypropylmethacrylat-Isomerengemisch, n-Butylacrylat, Styrol und Acrylsäure, mit einem OH-Gruppengehalt von 4 - 7 %, bezogen auf die 100 %ige Lieferform ohne Lösemittel und mit einer Säurezahl von max. 15 mg KOH/g.

Bei der Komponente A2.2.2) die anstelle der Komponente A2.2.1) oder (weniger bevorzugt) gleichzeitig mit dieser zur Anwendung gelangen kann, handelt es sich um Alkoxylierungsprodukte, insbesondere die Ethoxylierungs- oder Propoxylierungsprodukte von Bisphenol A, die pro Molekül im statistischen Mittel 2 bis 4 Alkylenoxideinheiten aufweisen. Diese Alkoxylierungsprodukte weisen Hydroxylzahlen von 243 bis 354, vorzugsweise von 300 bis 340, auf. Die entsprechenden Propoxylierungsprodukte des Bisphenol A sind besonders bevorzugt.

Geeignete Polyhydroxylverbindungen A2.3) sind beispielsweise mehrwertige Alkohole des Molekulargewichtsbereichs 62 bis 200 der bereits oben beispielhaft genannten Art.

Die Herstellung der blockierten NCO-Vorpolymerisate erfolgt in an sich bekannter Weise, beispielsweise in einer zweistufigen Reaktion durch Umsetzung der beispielhaft genannten Polyhydroxylverbindungen A2) mit überschüssigen Mengen an Polyisocyanaten A1) unter Einhaltung eines NCO/OH-Äquivalentverhältnisses von 2:1 bis 2,5:1. Art und Mengenverhältnisse der Ausgangskomponenten A1) und A2) werden im übrigen vorzugsweise so bemessen, daß die resultierenden NCO-Vorpolymerisate einen NCO-Gehalt von 3,0 bis 8,0, vorzugsweise 4,5 bis 7,0 Gew.-% und in blockierter Form schließlich ein mittleres Molekulargewicht im Bereich von 1 000 bis 10 000 aufweisen. Im Anschluß an die Herstellung der NCO-Vorpolymerisate erfolgt die Blockierungsreaktion mit vorzugsweise stöchiometrischen Mengen an Butanonoxim, gegebenenfalls unter Zuhilfenahme von Lösungsmitteln. Beide Umsetzungen werden im allgemeinen bei Temperaturen von ca. 50 bis 120°C, vorzugsweise 60 bis 80°C, durchgeführt.

Die Herstellung der blockierten NCO-Vorpolymerisate A) kann jedoch auch in einer Eintopfreaktion erfolgen, indem Polyhydroxylverbindungen A2) Butanonoxim und Polyisocyanat A1) innerhalb der gerade genannten Temperaturbereiche bis zum Verschwinden der NCO-Bande (IR-Spektrum) umgesetzt werden. In erster Näherung wählt man die Mengenverhältnisse der Reaktionspartner dabei so, daß auf 2 NCO-Äquivalente etwa 1 Hydroxyl- und 1 Oxim-Äquivalent entfallen.

Die so hergestellten blockierten NCO-Vorpolymerisate A) können zwecks Einstellung der optimalen Spritzviskosität der Beschichtungsmittel mit organischen Lösungsmitteln oder Weichmachern in einer Größenordnung von 25 bis 50 Gew.-%, bezogen auf Lösung, verdünnt werden. Beispielsweise können übliche Lacklösungsmittel, wie z. B. ®Solvesso 100, Solventnaphtha, Isobutanol, Butylacetat und/oder Methoxypropylacetat verwendet werden. Geeignete Weichmacher sind beispielsweise die bekannten Weichmacher auf Basis von Adipinsäure-, Phthalsäure- oder Alkylsulfonsäureester-Basis.

Bei der Härterkomponente B) handelt es sich um cycloaliphatische Polyamine mit mindestens 2 primären Aminogruppen. Beispielhaft genannt seien 4,4'-Diaminodicyclohexylmethan, 1,4-Diaminocyclohexan, 3,3,5-Trimethyl-5-aminomethylcyclohexylamin (IPDA) oder auch perhydrierte Triamino-diphenylmethane, wie sie gemäß DE-OS 3 417 683 zur Herstellung der entsprechenden cycloaliphatischen Triisocyanate eingesetzt werden. Beliebige Gemische derartiger Polyamine können ebenfalls verwendet werden. Bevorzugt sind 3,3'-Dimethyl-4,4'-diaminodicyclohexylmethan und 4,4'-Diamino-dicyclohexylmethan.

Die Herstellung der Bindemittelkombinationen erfolgt durch Vermischen der Komponenten A) und B), gegebenenfalls unter Mitverwendung der bereits oben beispielshaft genannten Lösungsmittel oder Weichmacher, wobei die Mengenverhältnisse so gewählt werden, daß ein Äquivalentverhältnis von blockierten NCO-Gruppen zu primären Aminogruppen von 1:0,8 bis 1:1,2, vorzugsweise 1:1 bis 1:1,2, und insbesondere von 1:1,05 bis 1:1,1 vorliegt.

Gewünschtenfalls können den erfindungsgemäßen Beschichtungsmitteln übliche Hilfs- und Zusatzmittel der Lacktechnologie (Komponente C)), wie beispielsweise Pigmente, Verlaufmittel, UV-Stabilisatoren, Antioxidantien, Füllstoffe oder Thixotropierungsmittel beigemischt werden.

Die Vereinigung der Bindemittelkombinationen mit den Hilfs- und Zusatzmitteln kann vor, gleichzeitig oder im Anschluß an die Durchmischung der Komponenten A) und B) erfolgen.

Die erfindungsgemäßen Beschichtungsmittel eignen sich insbesondere zur Herstellung von Einbrennbeschichtungen auf gegebenenfalls vorbehandelten metallischen Substraten, insbesondere solchen, wie sie beim Automobilbau zum Einsatz gelangen. Die Beschichtungen werden im allgemeinen innerhalb des Temperaturbereichs von 120 bis 160°C, vorzugsweise 120 bis 140°C, eingebrannt.

In den nachfolgenden Beispielen beziehen sich alle Prozentangaben mit Ausnahme der in "%" angegebenen, relativen Eigenschaftsänderungen auf das Gewicht.

### Beispiel 1

Dieses Beispiel beschreibt die Herstellung eines erfindungsgemäßen Beschichtungsmittels und die Eigenschaften einer damit hergestellten Beschichtung. Die hierbei eingesetzte Polyolkomponente besteht zu 70 Äquivalent-% aus Polyester A2.1) und zu 30 Äquivalent-% aus Polyacrylat A2.2.1).

### 1.1. Herstellung des Bindemittels

Ansatz:

| | |
|---|---|
| 595,0 g (0,7 Val) | eines Adipinsäure-Hexandiol-Neopentylgylkol-Polyesters (Gew.-Verh.: Hexandiol:Neopentylglykol = 77:33) mit der OH-Zahl 66 |
| 108,6 g (0,3 Val) | eines handelsüblichen Hydroxypolyacrylates (mit einer Säurezahl von 10), basierend auf Hydroxypropylmethacrylat, Butylacrylat, Styrol und Acrylsäure. OH-Gruppengehalt dieser 75 %igen Lieferform in Xylol beträgt 4,7 %, sein OH-Äquivalentgewicht demnach 362 g (®Desmophen A VP LS2051 der Bayer AG) |
| 92,4 g (1,1 Val) | 1,6-Diisocyanatohexan |
| 144,1 g (1,1 Val) | 4,4'-Diisocyanato-dicyclohexylmethan |
| 104,4 g (1,2 Val) | Butanonoxim |
| 409,0 g | Solventnaphtha 100 |
| 1453,5 g (1,2 Val block. NCO-Gruppen) | |
| 470 g (0,388 Val) | obiges blockiertes NCO-Vorpolymerisat |
| 48,5 g (0,407 Val NH₂) | 3,3'-Dimethyl-4,4'-diaminodicyclohexyl-methan block. NCO/NH₂ = 1:1,05 |

### Durchführung

Polyester, Polyacrylat und die beiden Diisocyanate werden in den oben angegebenen Mengen vorgelegt und unter Rühren auf 100°C erwärmt. Nach ca. 1 Stunde Umsetzungsdauer wird ein NCO-Gehalt von 5,3 % (berechnet 5,36 %) gemessen. Man verdünnt mit dem Lösemittel, läßt auf ca. 60°C abkühlen und gibt portionsweise die angegebene Butanonoxim-Menge so hinzu, daß die Temperatur nicht über 70°C ansteigt. Man rührt ca. 40 Minuten bei 70°C nach, bis kein NCO-Gehalt mehr nachweisbar (IR-Spektrum) ist. Die blockierte NCO-Vorpolymerisat-Lösung hat eine Viskosität bei 23°C von ca. 2800 mPas und ein blockiertes NCO-Äquivalent von 1211 g (block. NCO-Gehalt: 3,46 %).

### 1.2. Herstellung des Beschichtungsmittels

| | |
|---|---|
| 470,0 Gew.-Tle. | block. NCO-Vorpolymerisat gemäß 1.1 |
| 48,5 Gew.-Tle. | 3,3'-Dimethyl-4,4'-diamino-dicyclohexylmethan |
| 47,0 Gew.-Tle. | Titandioxyd (Rutil-Typ) |
| 211,5 Gew.-Tle. | Bariumsulfat |
| 3,0 Gew.-Tle. | Ruß FW 200 |
| 95,0 Gew.-Tle. | Magnesium-Silikat-Hydrat (Norwegian Talk) |
| 12,0 Gew.-Tle. | hochdisperse Kieselsäure |
| 45,0 Gew.-Tle. | 3-Methoxy-n-butyl-acetat |
| 56,0 Gew.-Tle. | Pineöl |
| 12,0 Gew.-Tle. | Butylacetat |
| 1000,0 Gew.-Tle. | |

Die obigen Komponenten mit Ausnahme des Diamin-Vernetzers werden in einem Dissolver (8000 Umdrehungen/min) ca. 30 min dispergiert. Zu beachten ist dabei, daß die Temperatur des Dispergiergutes nicht 50°C überschreitet. Dem Dispergiergut werden anschließend die 48,5 Gew.-Tle. an 3,3'-Dimethyl-4,4'-diaminodicyclohexylmethan unter gutem Rühren beigemischt.

Man erhält eine Formulierung eines hitzehärtbaren 1K-Beschichtungsmittels, das in dieser Form für das Druckluft- oder Airless-Spritzverfahren einsetzbar ist.

### 1.3. Eigenschaften des Beschichtungsmittels

### 1.3.1. Viskosität

Der berechnete Festkörper des Beschichtungsmittels gemäß 1.2. liegt bei ca. 75 %, die ermittelte Viskosität gemäß DIN 53 214 bei einem Schergeschwindigkeitsgefalle D von 39.9 sec⁻¹ liegt im Bereich von 3000 - 3500 mPas, je nach verwendetem Drehkörper.

### 1.3.2. Einbrennbedingungen

Das Beschichtungsmittel härtet ohne Zusatz eines Katalysators bei 130 - 140°C innerhalb von 30 min zu einem zäh elastischen Film mit der Shore A-Härte von ca. 65 aus.

### 1.3.3. Lagerstabilität

Da das obige Beschichtungsmittel ein potentiell reaktives System darstellt, wobei neben Reaktanden mit primären Aminogruppen solche mit blockierten NCO-Gruppen aber auch Polyestergruppen, die das Rückgrat des Polymeraufbaus darstellen, vorliegen, ist die Lagerstabilität ein Hauptprüfkriterium. Gefunden wird, daß nach 30tägiger Lagerung bei Raumtemperatur die Viskosität unverändert bleibt. Nach 1jähriger Lagerung bei Raumtemperatur steigt die Viskosität (DIN 53019/01) nur unwesentlich, und zwar um ca. 30 % im Vergleich zum Ausgangswert an. Auch die 7tägige Lagerung bei 50°C im Trockenschrank zeigt einen Viskositätsanstieg im Vergleich zum Ausgangswert um nur ca. 20 %.

### 1.3.4. Steinschlagschutz

Auf Lackierversuchsblechen, die mit einer KTL-Grundierung versehen sind, wird obiges Beschichtungsmittel so aufgerakelt, daß nach dem Einbrennen (30 min 140°C) ein Film mit einer Dicke von 200 µm entsteht. Dieses derart beschichtete Blech wird einem Abriebtest gemäß einer Hausspezifikation der Daimler Benz AG unterworfen. Hierbei wird Moränensplitt mit einem Durchmesser von 5 bis 8 mm (Lieferant: C. F. Mayer, Sindelfingen-Dachsklinge) und mit einem Druck von 0,8 bar auf die Beschichtung geschossen. An der Auftreffstelle des Splittstrahles wird jetzt die Zeit ermittelt, die benötigt wird, um das blanke Blech erscheinen zu lassen. Im vorliegenden Fall benötigt der Splittstrahl eine Einwirkungsdauer von 75 sec, was einen guten Abriebwiderstand des erfindungsgemäßen Beschichtungsmittels darstellt.

### 1.3.5. Bewitterungsverhalten

Prüfbleche mit dem obigen Beschichtungsmittel werden in dem UVB-Gerät 313 einem QUV-Test gemäß ASTM G 53-77 unterworfen. Nach 2000 Stunden Bewitterung wird die Beschichtung überprüft. Hierbei werden keine Risse, keine Kreidung und kein Glanzabfall festgestellt.

### Beispiel 2

Beispiel 1 wird wiederholt mit dem einzigen Unterschied, daß anstelle der 108,6 g (0,3 Val) des Polyacrylatharzes 51,9 g (0,3 Val) propoxyliertes Bisphenol A des Molekulargewichts 346 eingesetzt werden.

Die nach der Methode gemäß Beispiel 1 ermittelte Viskosität des so hergestellten Beschichtungsmittels liegt im Bereich von 3000 bis 4000 mPas. Die Lagerstabilität entspricht der Lagerstabilität des Beschichtungsmittels gemäß Beispiel 1. Der Steinschlagschutztest des bei 130 bis 140°C ausgehärteten zäh-elastischen Films der Shore A-Härte 70 ergibt eine Einwirkungsdauer von 75 sec. Das Bewitterungsverhalten entspricht dem Bewitterungsverhaltens des Lacks gemäß Beispiel 1.

### Beispiel 3 (Vergleich)

Beispiel 1 wird wiederholt, mit dem einzigen Unterschied, daß auf die Mitverwendung des Polyacrylatharzes verzichtet und gleichzeitig die Menge des Polyesterpolyols auf 850,0 g (1,0 Val) erhöht wird.

Die nach der Methode gemäß Beispiel 1 ermittelte Viskosität des so hergestellten Beschichtungsmittels liegt im Bereich von 2 000 bis 3 000 mPas. Die Lagerstabilität entspricht der Lagerstabilität des Beschichtungsmittels gemäß Beispiel 1. Der bei 130-140°C ausgehärtete elastisch-weiche Film hat nur eine Shore A-Härte von 40. Mithin ergibt sich beim Steinschlagschutztest nur eine Abriebzeit von 45 sec, also eine um mehr als 1/3 kürzere Widerstandszeit als bei den erfindungsgemäßen Beschichtungsmitteln.

### Beispiel 4

### 4.1. Herstellung des Bindemittels

Ansatz:

| | |
|---|---|
| 425,0 g (0,5 Val) | eines Adipinsäure-Hexandiol-Neopentylglykol-Polyesters mit der OH-Zahl 66 (vergl. Beispiel 1.1) |
| 102,0 g (0,3 Val) | Rizinusöl, OH-Zahl 164 |
| 34,6 g (0,2 Val) | bis-propoxyliertes Bisphenol A mit dem Molekulargewicht 346 |
| 131,0 g (1,0 Val) | 4,4'-Diisocyanato-dicyclohexylmethan |
| 92,4 g (1,1 Val) | 1,6-Diisocyanatohexan |
| 95,7 g (1,1 Mol) | Butanonoxim |
| 378,0 | Solventnaphtha 100 |
| 1258,7 g (1,1 Val blockierte NCO-Gruppen) | |
| 468,5 g (0,409 Val) | obiges blockiertes NCO-Vorpolymerisat |
| 51,1 g (0,430 Val NH₂) | 3,3'-Dimethyl-4,4'-diaminodicyclohexyl-methan block. NCO/NH₂ = 1:1,05 |

### Durchführung

Die beiden Diisocyanate sowie die Polyester und das Bisphenol-A-Derivat werden vorgelegt und unter Rühren auf 100°C erhitzt. Nach einer Umsetzungsdauer von ca. 2 Stunden bei 100°C wird ein NCO-Gehalt von 5,9 %, berechnet sind 5,98 %, gemessen. Man verdünnt mit Solventnaphtha 100, kühlt auf ca. 50°C ab und tropft Butanonoxim hinzu. Es wird ca. 30 min bei 70°C nachgerührt, danach sind keine NCO-Gruppen mehr nachweisbar (IR-Spektrum). Man erhält eine klare, leicht gelb gefärbte Lösung (70 % Festkörpergehalt) mit einer Viskosität bei 23°C von ca. 3700 mPas und einem blockierten NCO-Äquivalentgewicht von 1144 g entsprechend einem block. NCO-Gehalt von 3,6 %.

### 4.2. Herstellung des Beschichtungsmittels

Ansatz:

| | |
|---|---|
| 468,5 Gew.-Tle. | blockiertes NCO-Vorpolymerisat gemäß 2.1. |
| 51,1 Gew.-Tle. | 3,3'-Dimethyl-4,4'-diamino-dicyclohexylmethan |
| 41,4 Gew.-Tle. | Titandioxyd (Rutil-Typ) |
| 224,1 Gew.-Tle. | Bariumsulfat |
| 94,2 Gew.-Tle. | Magnesium-Silikat-Hydrat (Norwegian Talk) |
| 11,3 Gew.-Tle. | hochdisperse Kieselsäure |
| 11,0 Gew.-Tle. | Butylacetat |
| 43,8 Gew.-Tle. | 3-Methyl-n-butyl-acetat |
| 54,6 Gew.-Tle. | Pineöl |
| 1000,0 Gew.-Tle. | |

Die obigen Komponenten mit Ausnahme des Diamin-Vernetzers werden in einem Dissolver (8000 Umdrehungen/min) ca. 30 min dispergiert. Dabei soll vermieden werden, daß die Temperatur des Dispergiergutes 50°C überschreitet. Anschließend wird 3,3'-Dimethyl-4,4'-diamino-dicyclohexylmethan mit dem Dispergiergut vermischt. Man erhält ein fertig formuliertes 1K-Beschichtungsmittel, daß für diverse Spritzverfahren eingesetzt werden kann.

### 4.3. Eigenschaften des Beschichtungsmittels

### 4.3.1. Viskosität

Die nach der Methode gemäß Beispiel 1 ermittelte Viskosität bei 23°C des Beschichtungsmittels liegt bei einem Festkörpergehalt von ca. 75 % (nach Einwaage) im Bereich von 3000 - 4000 mPas (DIN 53 214).

### 4.3.2. Einbrennbedingungen

Das Beschichtungsmittel härtet ohne Zusatz eines Katalysators bei 130 - 140°C innerhalb von 30 min zu einem zäh elastischen Film mit der Shore A-Härte von ca. 65 aus.

### 4.3.3. Lagerstabilität

Das Beschichtungsmittel ist lagerstabil. Nach 30tägiger Lagerung bei Raumtemperatur wurde kein Viskositätsanstieg beobachtet. Nach 7 Tagen Lagerung im Trockenschrank bei 50°C wurde ein Anstieg der Viskosität (DIN 53019/01) im Vergleich zum Ausgangswert um lediglich 20 % ermittelt.

### 4.3.4. Steinschlagschutz

Auf Lackierversuchsblechen der Mercedes Benz AG, die mit einer KTL-Grundierung versehen sind, wird das obige Beschichtungsmittel aufgerakelt und 30 min bei 140°C im Trockenschrank eingebrannt. Es resultiert eine Trockenfilmdicke von 150 µm. Dieses beschichtete Blech wird dem Abriebtest gemäß der Spezifikation von Mercedes Benz ausgesetzt, d.h. das Blech wird mit Moränensplitt (Durchmesser 5 - 8 mm) unter einem Druck von 0,8 bar beschossen. Gemessen wird dabei die Zeit, in der an der beschossenen Stelle die Beschichtung vom Blech gerieben und das Blech freigelegt wird. Im vorliegenden Falle wurden Abriebzeiten von 70 sec ermittelt, wobei bereits 60 sec einen guten Abriebwiderstand darstellen.

### 4.3.5. Haftung

Die erfindungsgemäßen Beschichtungsmittel sollen im dekorativen Steinschlagschutz, d.h. zum Teil auf dem Decklack, eingesetzt werden. Hierzu wird auf Lackierversuchsbleche, die mit einer 2K-PUR-Zweilackschicht (Basis- und Klarlack) versehen sind, das obige Beschichtungsmittel aufgerakelt und 30 min bei 140°C eingebrannt. Es resultiert eine Trockenfilmdicke von 200 µm. Danach wird die Gitterschnitt-Prüfung (DIN 53 151) durchgeführt. Die Prüfung wird mit dem Kennwert GT 0 bewertet, d.h. die Schnittränder sind vollkommen glatt und kein Teilstück der schachbrettartig zerschnittenen Beschichtung ist abgeplatzt.

### Beispiel 5

Dieses Beispiel beschreibt die Herstellung eines erfindungsgemäßen Bindemittels in Weichmacher anstelle von Lösemittel. Mit diesen Bindemitteln können Dickschicht-Beschichtungen von mehreren Millimetern blasenfrei hergestellt werden.

### 5.1 Herstelllung des Bindemittels

| | |
|---|---|
| 255,0 g (0,3 Val) | eines Adipinsäure-Hexandiol-Neopentylglykol-Polyester der OH-Zahl 66 (vergl. Beispiel 1) |
| 153,0 g (0,45 Val) | Rizinusöl, OH-Zahl 164 |
| 43,3 g (0,25 Val) | Bis-propoxyliertes Bisphenol A (Dianol 33, vergl. Beispiel 2) |
| 100,8 g (1,2 Val) | 1,6-Diisocyanatohexan |
| 117,9 g (0,9 Val) | 4,4'-Diisocyanto-dicyclohexylmethan |
| 95,7 g (1,1 Val) | Butanonoxim |
| 138,0 g (1,16 Val) | 3,3'-Dimethyl-4,4'-diaminodicyclohexyl-methan |
| 430,0 g | Weichmacher Benzyloctyl-adipat |
| 1333,7 g | Einkomponenten-Bindemittel |

### Durchführung

Die beiden Diisocyanate sowie anschließend die Polyester und das Bisphenol A-Derivat werden vorgelegt und unter Rühren auf 100°C erhitzt. Nach einer Umsetzungsdauer von ca. 2 Stunden wird ein NCO-Gehalt von 6,5%, berechnet sind 6,9%, gemessen. Während der Ansatz auf ca. 50°C abkühlt, wird mit dem Weichmacher verdünnt. Butanonoxim wird hinzugetropft, wobei die Temperatur bis auf 70°C ansteigt. Es wird ca. 30 min bei 70°C gerührt, danach sind keine NCO-Gruppen mehr nachweisbar (IR-Spektrum). Man fügt jetzt das flüssige Diamin hinzu und erhält ein klares, leicht gelbes, einkomponentiges Bindemittel mit einer Viskosität bei 23°C von ca. 7500 mPas.

### 5.2 Eigenschaften des Bindemittels

### 5.2.1 Einbrennbedingungen/Filmhärte

Die Bindemittelmasse wird in Aluminiumdeckel (Durchmesser 6 cm) gegossen. Die Schichtdicke beträgt hierbei mehrere Millimeter. Die Aushärtung erfolgt im Trockenschrank bei 140°C während 30 min. Die ausgehärteten, ca. 5 cm dicken Prüfkörper sind zäh-elastisch und haben eine Shore A Härte von 45. Die Prüfkörper werden durchgeschnitten. An der Schnittstelle sieht man keinerlei Verdampfungsblasen, d.h. daß die dickschichtige Aushärtung blasenfrei erfolgt ist.

### 5.2.2 Lagerstabilität

Nach einer Lagerung von 30 Tagen bei Raumtemperatur wird kein Viskositätsanstieg beobachtet. Nach 7 Tagen Lagerung im Trockenschrank bei 50°C wird ein Anstieg der Viskosität (DIN 53019/01) im Vergleich zum Ausgangswert von ca. 20% gefunden. Nach diesem Befund gilt obiges Bindemittel als lagerstabil.

### 5.2.3 Steinschlagschutz

Das Bindemittel wird in einer Filmdicke von 300 µm auf Prüfbleche aufgerakelt und während 30 min bei 140°C eingebrannt. Dieses dick beschichtete Blech wird, wie in Beispiel 1.3.4 beschrieben, mit Moränensplitt von 0,8 bar Druck beschossen. Für die dickschichtige Beschichtung wird eine Abriebzeit von 255 sec festgestellt, was einen sehr guten Wert darstellt. Daß dieser Wert höher als in den vorangenangenen Beispielen liegt, ist auf das Fehlen der Pigmentformulierung zurückzuführen.

## Patentansprüche

1. Hitzehärtbares Beschichtungsmittel, bestehend im wesentlichen aus einer Bindemittelkombination aus
A) mit Butanonoxim blockierte Isocyanatgruppen aufweisenden Vorpolymerisaten eines durchschnittlichen Molekulargewichts von 1 000 bis 10 000 auf Basis von
A1) (cyclo)aliphatischen Polyisocyanaten und
A2) Hydroxylgruppen aufweisenden organischen Verbindungen und
B) einer Härter-Komponente, bestehend aus mindestens einem cycloaliphatischem Polyamin mit mindestens zwei primären Aminogruppen
in einem Äquivalentverhältnis von blockierten Isocyanatgruppen zu Aminogruppen von 1:0,8 bis 1:1,2, sowie gegebenenfalls
C) aus der Beschichtungstechnologie bekannten Hilfs- und Zusatzstoffen,
dadurch gekennzeichnet, daß die Komponente A2)
zu 50 bis 90 Hydroxyläquivalentprozent aus Hydroxylgruppen aufweisenden Polyestern A2.1),
zu 10 bis 50 Hydroxyläquivalentprozent aus Polyhydroxylverbindungen A2.2), ausgewählt aus der Gruppe bestehend aus Hydroxylgruppen aufweisenden Polyacrylatharzen A2.2.1), Alkoxylierungsprodukten A2.2.2) von Bisphenol A, die im Mittel 2 bis 4 Alkylenoxideinheiten pro Molekül enthalten und Gemischen von Verbindungen A2.2.1) und A2.2.2),
sowie zu
0 bis 30 Hydroxyläquivalentprozent an sonstigen organischen Polyhydroxylverbindungen A 2.3)
besteht.

2. Verwendung der Beschichtungsmittel zur Herstellung von dekorativen, steinschlagfesten und dickschichtigen Decklacken auf metallischen Substraten nach den üblichen Methoden der Beschichtungstechnologie.

## Claims

1. Heat curable coating composition substantially consisting of a binder combination prepared from
A) prepolymers comprising butanone oxime-blocked isocyanate groups and of an average molecular weight of 1000 to 10000 based on
A1) (cyclo)aliphatic polyisocyanates and
A2) organic compounds comprising hydroxyl groups and
B) a curing component consisting of at least one cycloaliphatic polyamide having at least two primary amino groups
in an equivalent ratio of blocked isocyanate groups to amino groups of 1:0.8 to 1:1.2, optionally together with
C) auxiliary substances and additives known from coatings technology,
characterised in that component A2) consists of
from 50 to 90 hydroxyl equivalent percemt of polyesters A2.1) comprising hydroxyl groups,
from 10 to 50 hydroxyl equivalent percent of polyhydroxyl compounds A2.2) selected from the group consisting of polyacrylate resins A2.2.1) comprising hydroxyl groups, alkoxylation products A2.2.2) of bisphenol A, which contain on average 2 to 4 alkylene oxide units per molecule and mixtures of compounds A2.2.1) and A2.2.2),
as well as
from 0 to 30 hydroxy equivalent percent of other organic polyhydroxyl compounds A 2.3).

2. Use of the coating compositions for the production of decorative, stone impact resistant and high-build topcoat lacquers on metal substrates using conventional methods of coatings technology.

## Revendications

1. Composition de revêtement thermodurcissable, constituée essentiellement d'une combinaison de liant constituée
A) de prépolymères présentant des groupes isocyanates bloqués avec de la butanone-oxime d'un poids moléculaire moyen de 1 000 à 10 000 à base
A1) de polyisocyanates (cyclo)aliphatiques et
A2) de composés organiques présentant des groupes hydroxyle et
B) d'un constituant de durcissement constitué au moins d'une polyamine cycloaliphatique avec au moins deux groupes amino primaires
dans un rapport d'équivalent des groupes isocyanate bloqués aux groupes amino de 1 : 0,8 à 1:1,2, ainsi qu'éventuellement
C) d'auxiliaires et d'additifs connus dans la technologie du revêtement,
caractérisée en ce que le constituant A2) est constitué
de 50 à 90 pour-cent d'équivalent hydroxyle de polyesters présentant des groupes hydroxyle A2.1),
de 10 à 50 pour-cent d'équivalent hydroxyle de composés polyhydroxyle A2.2), choisis parmi des résines polyacrylate présentant des groupes hydroxyle A2.2.1), des produits d'alcoxylation A2.2.2) de bisphénol A qui contiennent en moyenne de 2 à 4 unités d'oxyde d'alkylène par molécule et des mélanges des composés A2.2.1) et A2.2.2), ainsi que
de 0 à 30 pour-cent d'équivalent hydroxyle d'autres composés organiques polyhydroxyle A2.3).

2. Utilisation de la composition de revêtement pour la préparation de vernis de finition décoratifs, résistants aux gravillons et en couches épaisses sur des substrats métalliques selon les procédés classiques de la technologie du revêtement.
